# EUROPEAN PATENT SPECIFICATION

(11) **EP 4 655 545 B1**
(45) Date of publication and mention of the grant of the patent: **07.10.2026**
(21) Application number: 23836892.2
(22) Date of filing: 28.12.2023
(51) Int. Cl.: F28D 7/00, F28D 7/16, F28D 20/00

(54) **HEAT EXCHANGER AND SYSTEM FOR TREATMENT OF ORGANIC WASTE**
WÄRMETAUSCHER UND SYSTEM ZUR BEHANDLUNG VON ORGANISCHEM ABFALL
ÉCHANGEUR DE CHALEUR ET SYSTÈME DE TRAITEMENT DE DÉCHETS ORGANIQUES

(30) Priority: 26.01.2023 FI 20235073
(43) Date of publication of application: 03.12.2025
(73) Proprietor: Evac Oy, 02600 Espoo (FI)
(72) Inventor: PIEKIÄINEN, Vesa, 00640 Helsinki (FI); MATHEWS, Sebastian, 02920 Espoo (FI); SAHANEN, Vesa, 18150 Heinola (FI); LIIKANEN, Petri, 18100 Heinola (FI)
(74) Representative: Berggren Oy
(86) International application number: PCT/FI2023/050743
(87) International publication number: WO 2024/156935

(56) References cited:
- DE-B- 1 105 894
- FR-A1- 2 321 674
- US-A- 3 907 026
- US-A1- 2011 120 683

## Description

### Technical field

The invention relates in general to heat exchangers and to systems for treatment of organic waste. Especially the invention relates to a system for treatment of organic waste according to claim 4.

### Background

A heat exchanger known from prior art typically comprises a tube and a jacket side and the heat is transferred from a medium to another by means of heat delivery surface tubes, which are provided typically as primary tubes and secondary tubes for the heat transfer mediums. The prior art heat exchangers in connection with systems for treatment of organic waste have typically overly complicated configuration, which often also leads to increased size of the heat exchanger and thus, makes the usage of them in applications with limited space inconvenient.

Hydrothermal carbonization processes for treatment of organic wastes are well known. In the hydrothermal carbonization processes heat exchangers are used to heating and/or cooling of the organic waste. The heat exchangers known from prior art typically comprise a tube side and a shell side, wherein the heat transfers from a substance to another by means of heat delivery tubes. The pre-heating of feeding material, i.e. organic waste, is conducted by recovering heat by means of a heat exchanger used for cooling treated discharged waste sludge. Due to the high temperature of the discharged waste sludge, organic material easily accumulates on the heat exchanger surfaces and may even block the flow of the organic material between the tubes of the heat exchanger, which in due course lowers the overall energy efficiency of the process and may thus even prevent the operation of the heat exchanger. Also, the high solid content of the waste will cause blockages, if used in a heat exchanger with compartments.

The known hydrothermal carbonization systems are often complex and include multi-stage processes. Thus, systems for treatment of organic waste have often very complicated configuration. Attempts to improve efficiency have been made by e.g. cyclic processes and re-using energy from one process stage to another. However, the known systems still often remain inefficient and result in a loss of considerable amounts of thermal energy.

In heat exchangers known from prior art to be used for systems for treatment of organic waste problems have occurred due to high solids content of the substance to be treated causing low flow-properties and thus, poor pumping capability. This has led to blockages in the heat exchangers and thus, to need of cleaning. The heat-exchangers known from prior art are almost impossible to clean. Therefore a great need for a heat-exchanger, which is easy to clean, exists.

DE1105894B discloses a heat exchanger according to the preamble of claim 1.

In patent application publication EP3514218A1 is disclosed a system for treatment of organic waste by means of hydrothermal carbonization under given process conditions, which system comprises at least one source organic waste, at least one wet waste tank, a wet waste mixing tank, at least a first thermal reactor and a second thermal reactor, a biochar cooler, and at least one steam conduit provided with a valve for providing a connection between the first thermal reactor and the second thermal reactor for supplying steam from the first thermal reactor to the second thermal reactor or from the second thermal reactor to the first thermal reactor in an alternating manner for providing heat and pressure for a thermal hydrolysis process. The system additionally includes at least one water conduit provided with a pump for providing a connection between the first thermal reactor and the second thermal reactor for supplying hot and pressurized water from the first thermal reactor to the second thermal reactor or from the second thermal reactor to the first thermal reactor in an alternating manner for achieving the given process conditions.

One object of the invention is to eliminate or at least minimize the above problems and disadvantages of prior art heat exchangers.

A further object of the invention is to simplify the configuration of heat exchangers.

One object of the invention is to eliminate or at least minimize the above problems and disadvantages of prior art systems for treatment of organic waste.

A further object of the invention is to simplify the configuration of systems for treatment of organic waste.

A particular object of the invention is to create a heat exchanger with decreased size and footprint.

### Summary

To achieve the above-mentioned objects and those which come out later, the heat exchanger according to the invention is mainly characterized by what is presented in the characterizing part of the independent heat exchanger claim 1.

The system for treatment of organic waste according to the invention, in turn, is mainly characterized by what is presented in the characterizing part of the system claim 4.

Advantageous features of the invention are defined in dependent claims.

On a general level the present invention also pertains to a hydrothermal carbonization process, which is a thermo-chemical process with a given process time (duration), in which organic material is disintegrated into carbon-ions by raising the temperature in a closed reactor to about 200-250°C, whereby also the pressure is raised to about 20-25 bar. The organic material disintegrates and the resulting carbon re-condensates into aromatic carbon compounds. The final product of this process is biochar, or hydrochar, the chemical composition of which is similar to fossil coal. The main given process conditions are temperature, pressure and process time (duration). The process conditions can also be called the process parameters.

According to the invention the heat exchanger comprises heat delivery surface tubes arranged in at least one bank of tubes, and end elements, wherein the heat exchanger comprises a casing around the bank of the tubes, in the heat exchanger the substance to be heated or cooled is configured to be flow in the tubes, the tubes are straight and a stationary heat transfer medium is located in volumes inside the casing between the tubes and each end of the tubes is attached releasably to the end element.

According to the invention the heat exchanger has a primary side and a secondary side, which are formed by means of channels located in the end elements, and the heat exchanger is by means of the primary side and the secondary side configured to heat up and cool down two different substances by running the two different substances opposite to each other in the primary side and the secondary side, i.e. the hot and cold sides. This design allows thus simultaneous heating up and cooling down of two different substances for example two different sludge like material streams that both can have a very high solid content.

According to the invention the end elements are formed of tube plates and turn chamber plates, which plates are sealed by seals located between the plates.

According to the invention the channels located in the end elements are located in the tube plates and turn chamber plates of the end elements.

According to an advantageous feature of the invention the end elements are openable by means of the releasable attachment and that the tubes are configured to be cleaned when the end elements are removed.

According to an advantageous feature of the invention the heat transfer medium comprises mass-like and/or paste-like substance and/or a solid substance. Especially advantageous is a combination of mass-like or paste-like substance and of a solid substance when the heat transfer medium in solid form also supports the structure of the heat exchanger. The heat transfer medium in the solid form can be constructed for example as profiles. The material of the solid form is selected from materials with good heat conductivity and good manufacturing properties, for example with good moldability, especially preferable is/are aluminum profile/-s.

According to the invention the system for treatment of organic waste is a system for treatment of organic waste by means of hydrothermal carbonization, which system comprises at least one source organic waste, at least one wet organic waste tank, at least a one thermal reactor for the hydrothermal carbonization, a heat exchanger, wherein the at least one wet organic waste tank and the at least one thermal reactor are in flow-connection with the heat exchanger and the heat exchanger is configured to heat the organic waste to be treated in the thermal reactors by means of hydrothermal carbonization and configured to cool biochar sludge received from the thermal reactors as a result of the hydrothermal carbonization and the heat exchanger comprises heat delivery surface tubes arranged in at least one bank of tubes and end elements, the heat exchanger comprises a casing around the bank of the tubes, in the heat exchanger the substance to be heated and/or cooled is configured to be flow in the tubes, the tubes are straight, and a stationary heat transfer medium is located in volumes inside the casing between the tubes and each end of the tubes is attached releasably to the end element.

According to an advantageous feature of the invention the system comprises a discharge line pressurization unit for pre-pressurizing discharge of at least one of the thermal reactors.

According to an advantageous feature of the invention the heat exchanger is connected to a heat exchange monitoring unit, which monitoring unit is configured to monitor pressure loss increase and thermal efficiency of the heat exchanger based on measurement results received on measuring means, for example sensors, provided in the heat exchanger.

According to an advantageous feature of the invention the system comprises a viscosity and/or solids content control unit and a heat exchanger control unit connected a common control unit of the system or formed as separate control units connected to a common control unit of the system.

According to an advantageous aspect of the invention in the heat exchanger, the substances to be heated and cooled are not in connection with each other via the wall of the tubes as in the heat exchangers known from prior art, but instead the substances to be heated and cooled flow in tubes of their own and the heat transfer medium is located in between the tubes.

In the heat exchangers known from prior art at a primary side is located the substance to be heated / cooled, and at a secondary side is located the heat transfer medium as typically, the purpose being to heat or cool the substance.

In heat exchangers for hydrothermal carbonization processes the purpose is to warm a cool substance and to cool a hot substance. Both substances have high solids content and pressure drop in substance flow is high, thus the systems known from prior art cannot be utilized, as the secondary side would quickly be blocked by the solids. Thus, according to an advantageous aspect of the invention straight tubes are used and thus, smoot flows both in the primary side and in the secondary side are achieved. The heat transfer is arranged via a stationary i.e. static but replaceable heat transfer medium located around / in between the tubes. The heat transfer medium does not flow out or in the heat exchanger during its use but remains inside the heat exchanger around/in between the tubes of the heat exchanger.

According to an advantageous aspect of the invention the heat exchanger comprises straight tubes, which are attached at each end releasably to end elements. Advantageously the end elements are formed of tube plates and turn chamber plates and seals between the plates. Advantageously, between two end elements attached tubes are formed as at least one bank of the tubes by means of mangling or welding or pressing or like. Thus, the heat exchanger comprises at least one bank of tubes. The heat exchanger has a primary side and a secondary side, which are formed by means of channels located in end elements, and tubes connecting said elements. The channels in the end elements are sealed to plates by seals.

According to an advantageous aspect of the invention in the heat exchanger the materials flow in the tubes and the heat transfer medium is located between the tubes located heat transfer volumes inside the casing for the bank of tubes and thus, the heat is transferred inside the casing mounted around the tubes, in which casing volumes between the tubes is filled with the heat transfer medium. This provides for increased heat transfer surfaces and thus, more efficient heat transfer compared to solutions known from prior art.

According to an advantageous aspect of the invention the heat exchanger comprises tubes, which are advantageously straight, and the substance to be heated and/or cooled flows in these tubes. The tubes are attached releasably to end elements at each end of the tubes. The end elements are openable and thus the tubes can be easily cleaned by detaching the releasably attached end elements.

According to an advantageous aspect the system for treatment of organic waste comprises a pre-pressurization means of the discharge conduit for controlling the discharge flow from the thermal reactors. Pre-pressurization is advantageously provided by, for example, pumping water into a discharge conduit of system for treatment of organic waste, until the pressure in the discharge conduit is close to the pressure inside that thermal reactor of the system for treatment of organic waste, which is about to be discharged.

By the heat exchanger and the system for treatment of organic waste according to the invention and their advantageous features many advantages are achieved: it is possible to achieve a compact system that optimizes the use of energy within the system itself. Therefore, this is a particularly advantageous system to be installed on a marine vessel where the use of space is limited, and the supply of external energy is not available. In the heat exchanger the risk of blockage is reduced and there is no risk of accumulation on secondary side since the design consists of straight pipes without compartments. Cleaning of the heat exchanger is easy since it consists of mainly straight piping and since the stationary heat transfer medium is located around / in between the tubes of the piping. Also, the design eliminates the need to use through the heat exchanger flowing thermal oil, or similar active heat transfer mediums. In the system for treatment of organic waste the pre-pressurization of the discharge conduit reduces flow control problems of the discharge of the thermal reactors during the discharge. Additionally, the possible "pressure shocks" are prevented by the pre-pressurization means.

### Brief description of the drawings

Aspects of the invention, however, together with additional objects and advantages thereof, will be best understood from the following description of some example embodiments when read in connection with the accompanying drawings and in the following the invention is described in more detail referring to the accompanying drawing, in which
In figures 1A - 1C is schematically shown an advantageous example of a heat exchanger according to the invention.
In figure 2 is schematically shown as an isometric view the advantageous example of a heat exchanger according to the invention shown in the figures 1A-1C.
In figure 3 is schematically shown cutaway views D-D of the advantageous example of a heat exchanger according to the invention shown in the figures 1A-1C.
In figures 4A-B is schematically shown alternative examples of detail E of figure 3 of the advantageous example of a heat exchanger according to the invention shown in the figures 1A-3.
In figure 5 is schematically show an advantageous example of a system for treatment of organic waste according to the invention.

### Detailed description

During the course of this description like numbers and signs will be used to identify like elements according to the different views which illustrate the invention. Repetition of some reference signs may have been omitted in the figures for clarity reasons.

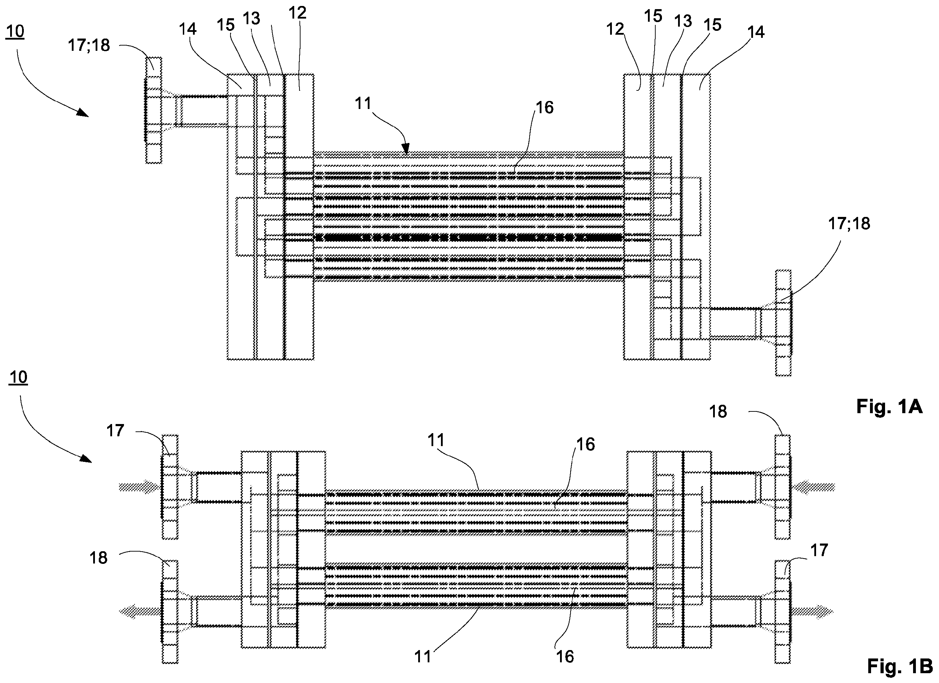

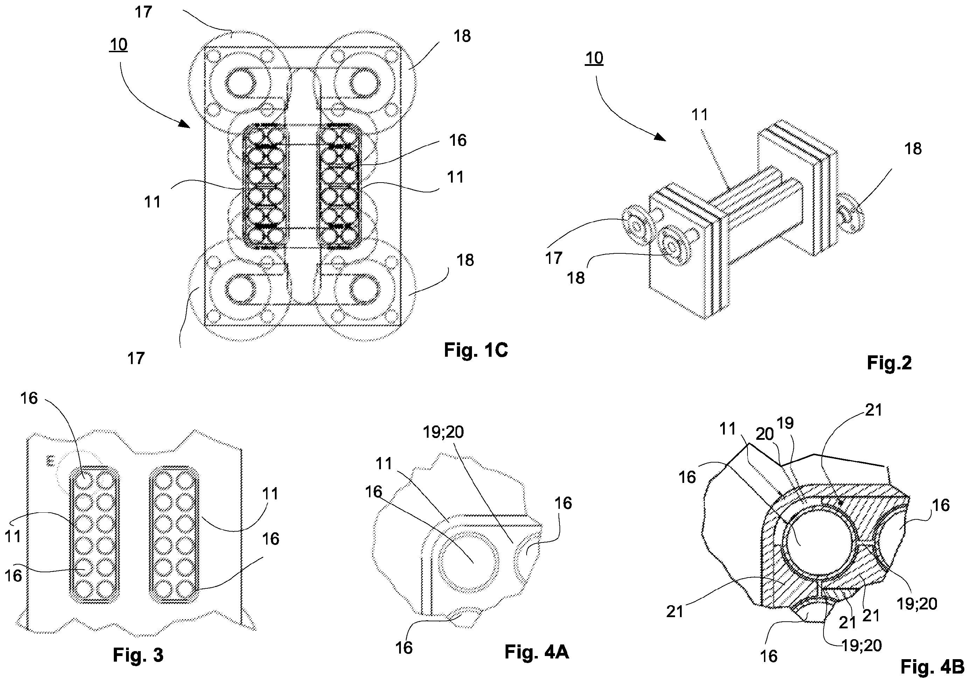

In figures 1A - 3 and 4A-4B is shown an example of a heat exchanger 10. The heat exchanger 10 comprises heat delivery surface tubes 16 and end elements formed of tube plates 12 and turn chamber plates 13, 14 and seals 15. Advantageously, between the tubes 16 are formed as at least on bank of the tubes 16 located inside a casing 11 by means of mangling or welding or pressing or like. The tubes 16 are straight. The heat exchanger comprises thus at least one bank of straight tubes 16, each bank is located inside its own casing 11, which casing 11 thus, is mounted around the tubes 16 of the bank. The heat exchanger 10 has a primary side 17 and a secondary side 18, which are formed by means of channels in the tube plates 12 and in the turn chamber plates 13, 14 located in end elements. The channels in the tube plates 12 and in the turn chamber plates 13, 14 of the end elements are sealed by seals. In the heat exchanger 10 the substance to be heated and/or cooled is flow in the tubes 16 and in the casing 11 volumes 19 between the tubes 16 is filled with the stationary heat transfer medium 20; 21. The heat transfer medium is stationary i.e. static but replaceable and located around / in between the tubes. The heat transfer medium does not flow out or in the heat exchanger 10 during its use but remains inside the heat exchanger 10 around/in between the tubes 16 of the heat exchanger 10. The heat exchanger 10 is by means of the primary side 17 and the secondary side 18 configured to simultaneously heat up and cool down two different substances by running the two different substances opposite to each other in the primary side 17 and the secondary side 18. Via inlet channels the substance to be heated/cooled is guided to the heat exchanger 10 and via outlet channels the substance heated/cooled is removed from the heat exchanger. Because the tubes 16 are straight and the heat delivery surface tubes 16 are releasably attached to the end elements at the ends of the heat delivery surface tubes 16 and the end elements are openable, thus, the heat exchanger 10 can be easily cleaned.

In figure 4A in the casing 11 volumes 19 between the tubes 16 is filled with the stationary heat transfer medium 20, which in this example comprises mass-like and/or paste-like substance.

In figure 4B in the casing 11 volumes 19 between the tubes 16 is filled with the stationary heat transfer medium 20,21, which in this example comprises mass-like and/or paste-like substance 20 and a solid substance 21, with high thermal conductivity. The solid substance 21 can for example be material profiles made of a material having a good thermal conductivity, such as aluminum profiles. In addition to provide heat transfer the solid substance 21 as the heat transfer medium provides support to the structure of the heat exchanger.

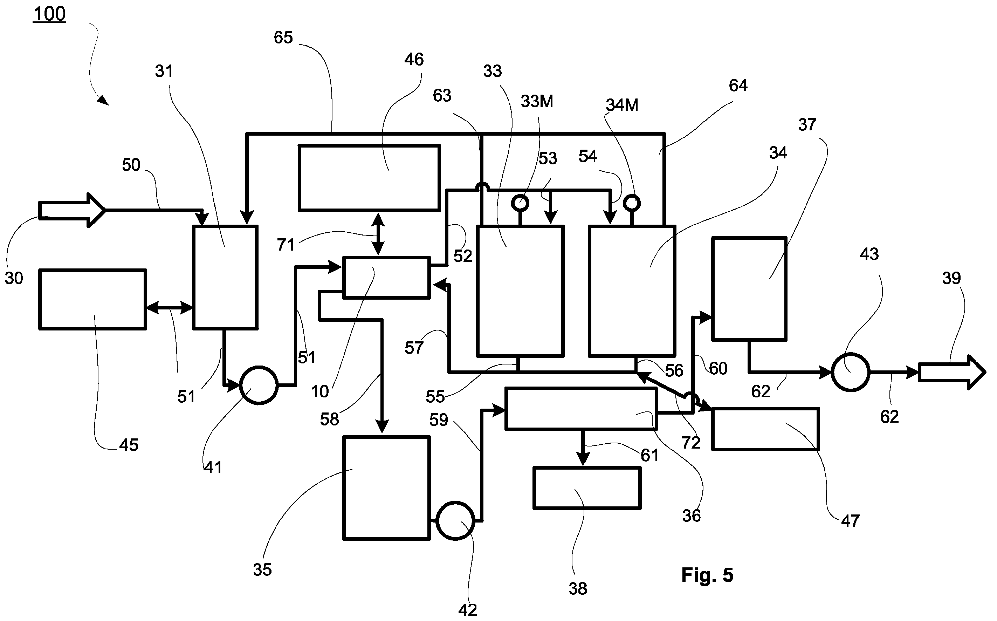

In figure 5 is schematically shown an advantageous example of a system 100 for treatment of organic waste. The system 100 for treatment of organic waste by means of hydrothermal carbonization includes at least one source of organic waste 30, from which source the organic waste 30 is fed to the system 100 via an inlet channel 50. The organic waste 30 is typically in wet state. The organic waste is fed via the inlet channel 50 to a first tank indicated by reference numeral 31. The first tank 31 comprises mixing means to mix the organic waste 30 in the wet state for providing mixed wet waste for further processing. The wet organic waste can e.g. be in the form of so-called bio-sludge and food waste. The first tank 31 can advantageously comprise viscosity and/or solids measuring means, for example sensors, and measurement results of the viscosity and/or solids measuring means are transferred via a connection 51 to a viscosity and/or solids content control unit 45.

The mixed wet organic waste 30 is then fed for heating from the first tank 31 to a heat exchanger 10 by means of a pump 41 through a feeding conduit 51. From the heat exchanger the wet organic waste 30 is fed via a feeding conduit 52 alternating to feeding conduits 53, 54 of a first thermal reactor 33 and of a second thermal reactor 34, respectively. In the system for treatment of organic waste by means of hydrothermal carbonization, where an initial process is conducted alternating in the first thermal reactor 33 and in a second thermal reactor 34.

In a first initial phase, an initial batch of mixed wet organic waste 30 is fed from the first tank 31 via the feeding conduit 52 by means of a high-pressure pump 41 alternating to the first and second thermal reactors 33, 34 through the respective feeding conduits 53 and 54. The first and the second thermal reactors 33, 34 are provided respectively with a mixing device 33M,34M for providing a continuous mixing of the received mixed wet waste.

The process temperature in the first and second thermal reactors 33, 34 is provided by the heat exchanger 10 and raised with an external energy source, for example by electric heating, to a given temperature level, typically to a temperature value over 200 °C. Pressure level in the first and second thermal reactors 33, 34 is typically over 20 bar depending on the selected temperature value. The mixed wet organic waste in the first thermal and in the second thermal reactors 33, 34 is at the same time subject to continuous mixing by means of the mixing devices 33M, 34M, respectively and is kept in the first and second thermal reactors 33, 34 for a given process time of set number of hours. The given temperature level, the given pressure level and the given process time discussed above will below be referred to as the given process conditions, in other words the desired process conditions. The hydrothermal carbonization process is exothermal, whereby heat energy is released due to chemical reactions. In addition, external heat sources are used to secure high temperature. The reactors provide closed systems after the feeding of mixed wet waste to the reactors.

When the processes in the first and in the second thermal reactors 33, 34 is completed, the mixed waste has been carbonized into biochar sludge. After this the biochar sludge is led from the first and the second thermal reactors 33, 34 via discharge conduits 55, 56, respectively, to the heat exchanger 10 via a discharge conduit 57 for cooling. The discharge conduit 57 is connected via a connection line 72 to a discharge line pressurization unit 47 for pre-pressurizing the discharge. Pre-pressurization can be done by, for example, pumping water into the discharge conduit 57, until the pressure in the conduit 57 is close to the pressure inside the thermal reactor 53, 54, which is about to be discharged.

After the biochar sludge has cooled to a sufficient degree in the heat exchanger 10, the biochar sludge is discharged from the heat exchanger 10 to a storage tank 35 comprising mixing means to mix the biochar sludge.

From the storage tank 35 the biochar sludge is led to a drying process by drying means 36 via a transfer conduit 59 provided with a pump 42, which is high-pressure pump. The drying means 36 provide mechanical drying for separating water and char solids. From the drying process the dry-char 38 from 36 is discharged via a discharge conduit 61 to external storage and separated water, known as reject water, is led to a reject water tank 37 via a transfer conduit 60. From the reject water tank 37 the reject water is led to further processing 39 via a discharge conduit 62 provided by means of a pump 43, which is high-pressure pump.

The first and second thermal reactors 33, 34 have venting connections 63, 64, respectively, to control that the pressure in the thermal reactors 33, 34. If the pressure rises too high in the thermal reactors 33 and 34, gases can be removed via the venting conduits 63, 64, respectively and led back to the first tank 31 via a transfer conduit 65.

The heat exchanger 10 provides on one hand for heating the organic waste to be treated in the thermal reactors 33, 34 by means of hydrothermal carbonization and on the other hand for cooling the biochar sludge received from the thermal reactors 33, 34 as a result of the hydrothermal carbonization.

The heat exchanger 10 is advantageously connected to a heat exchanger control unit 46, which monitors pressure loss increase and thermal efficiency of the heat exchanger 10 based on measurement results received on measuring means, for example sensors, provided in the heat exchanger 10.

The viscosity and/or solids content control unit 45 and the heat exchanger control unit 46 can be connected a common control unit of the system 100 or formed as separate control units connected to a common control unit of the system 100.

In the description in the foregoing, although some functions have been described with reference to certain features, those functions may be performable by other features whether described or not. Although features have been described with reference to certain embodiments or examples, those features may also be present in other embodiments or examples whether described or not. Above the invention has been described by referring to some advantageous examples only to which the invention is not to be narrowly limited. Many modifications and alterations are possible provided they are within the scope of appended claims.

## Claims

1. Heat exchanger comprising heat delivery surface tubes (16) arranged in at least one bank of tubes (16) and end elements, which heat exchanger (10) comprises a casing (11) around the bank of the tubes (16), which tubes (16) are straight, in which heat exchanger (10) the substance to be heated or cooled is configured to be flow in the tubes (16) and a stationary heat transfer medium (20; 21) is located in volumes (19) inside the casing (11) between the tubes (16) and each end of the tubes (16) is attached releasably to the end element, which heat exchanger (10) has a primary side (17) and a secondary side (18), which are formed by means of channels located in the end elements, and the heat exchanger (10) is by means of the primary side (17) and the secondary side (18) configured to heat up and cool down two different substances by running the two different substances opposite to each other in the primary side (17) and the secondary side (18), **characterized in, that** the end elements are formed of tube plates (12) and turn chamber plates (13, 14), which plates (12, 13,14) are sealed by seals (15) located between the plates (12, 13, 14) and **that** the channels located in the end elements are located in the tube plates (12) and turn chamber plates (13, 14) of the end elements.

2. Heat exchanger according to claim 1, **characterized in, that** the end elements are openable by means of the releasable attachment and that the tubes (16) are configured to be cleaned, when the end elements are removed.

3. Heat exchanger according to claim 1 or 2, **characterized in, that** the heat transfer medium comprises mass-like and/or paste-like substance (20) and/or a solid substance (21).

4. System for treatment of organic waste, which system is a system for treatment of organic waste by means of hydrothermal carbonization, which system comprises at least one source organic waste, at least one wet organic waste tank (31), at least a one thermal reactor (33; 34) for the hydrothermal carbonization, a heat exchanger (10) according to any of claims 1-3, **characterized in that** the at least one wet organic waste tank (31) and the at least one thermal reactor (33; 34) are in flow-connection (53; 54) with the heat exchanger (10) and that the heat exchanger (10) is configured to heat the organic waste to be treated in the thermal reactors (33, 34) by means of hydrothermal carbonization and configured to cool biochar sludge received from the thermal reactors (33, 34) as a result of the hydrothermal carbonization.

5. System for treatment of organic waste according to claim 4, **characterized in, that** the system comprises a discharge line pressurization unit (47) for pre-pressurizing discharge of at least one of the thermal reactors (33, 34).

6. System for treatment of organic waste according to claim 4 or 5, **characterized in, that** the heat exchanger (10) is connected to a heat exchange monitoring unit (46), which monitoring unit (46) is configured to monitor pressure loss increase and thermal efficiency of the heat exchanger (10) based on measurement results received on measuring means, for example sensors, provided in the heat exchanger (10).

7. System for treatment of organic waste according to any of claims 4 - 6, **characterized in, that** the system comprises a viscosity and/or solids content control unit (45) and a heat exchanger control unit (46) connected a common control unit of the system (100) or formed as separate control units connected to a common control unit of the system (100).

## Patentansprüche

1. Wärmetauscher, umfassend Wärmeabgabeflächenrohre (16), die in mindestens einer Rohrbank (16) angeordnet sind, und Endelemente, wobei der Wärmetauscher (10) ein Gehäuse (11) um die Rohrbank (16) umfasst, wobei die Rohre (16) gerade sind, wobei in dem Wärmetauscher (10) die zu erhitzende oder zu kühlende Substanz so ausgebildet ist, dass sie in den Rohren (16) strömen kann, wobei ein stationäres Wärmeübertragungsmedium (20; 21) in Volumina (19) innerhalb des Gehäuses (11) zwischen den Rohren (16) angeordnet ist und jedes Ende der Rohre (16) lösbar an dem Endelement befestigt ist, wobei der Wärmetauscher (10) eine Primärseite (17) und eine Sekundärseite (18) aufweist, die mittels in den Endelementen angeordneter Kanäle gebildet sind, und wobei der Wärmetauscher (10) mittels der Primärseite (17) und der Sekundärseite (18) dazu ausgebildet ist, zwei unterschiedliche Substanzen durch entgegengesetztes Führen der zwei unterschiedlichen Substanzen in der Primärseite (17) und der Sekundärseite (18) zu erwärmen und zu kühlen**, dadurch gekennzeichnet, dass** die Endelemente aus Rohrplatten (12) und Umlenkkammerplatten (13, 14) gebildet sind, wobei diese Platten (12, 13, 14) mittels zwischen den Platten (12, 13, 14) angeordneter Dichtungen (15) abgedichtet sind, und **dass** die in den Endelementen angeordneten Kanäle in den Rohrplatten (12) und Umlenkkammerplatten (13, 14) der Endelemente angeordnet sind.

2. Wärmetauscher nach Anspruch 1, **dadurch gekennzeichnet, dass** die Endelemente mittels der lösbaren Befestigung geöffnet werden können und dass die Rohre (16) bei entfernten Endelementen gereinigt werden können.

3. Wärmetauscher nach Anspruch 1 oder 2, **dadurch gekennzeichnet, dass** das Wärmeübertragungsmedium eine massenartige und/oder pastenartige Substanz (20) und/oder eine feste Substanz (21) umfasst.

4. System zur Behandlung von organischem Abfall, das ein System zur Behandlung von organischem Abfall mittels hydrothermaler Karbonisierung ist und mindestens eine Quelle organischen Abfalls, mindestens einen Tank (31) für nassen organischen Abfall, mindestens einen thermischen Reaktor (33; 34) für die hydrothermale Karbonisierung sowie einen Wärmetauscher (10) nach einem der Ansprüche 1 - 3 umfasst, **dadurch gekennzeichnet, dass** der mindestens eine Tank (31) für nassen organischen Abfall und der mindestens eine thermische Reaktor (33; 34) mit dem Wärmetauscher (10) in Strömungsverbindung (53; 54) stehen und dass der Wärmetauscher (10) dazu ausgebildet ist, den in den thermischen Reaktoren (33, 34) mittels hydrothermaler Karbonisierung zu behandelnden organischen Abfall zu erhitzen und von den thermischen Reaktoren (33, 34) als Ergebnis der hydrothermalen Karbonisierung erhaltenen Biochar-Schlamm zu kühlen.

5. System zur Behandlung von organischem Abfall nach Anspruch 4, **dadurch gekennzeichnet, dass** das System eine Druckbeaufschlagungseinheit (47) für die Austragsleitung zum Vordruckbeaufschlagen des Austrags von mindestens einem der thermischen Reaktoren (33, 34) umfasst.

6. System zur Behandlung von organischem Abfall nach Anspruch 4 oder 5, **dadurch gekennzeichnet, dass** der Wärmetauscher (10) mit einer Wärmeaustauschüberwachungseinheit (46) verbunden ist, welche Überwachungseinheit (46) dazu ausgebildet ist, auf der Grundlage von von in dem Wärmetauscher (10) vorgesehenen Messmitteln, beispielsweise Sensoren, empfangenen Messergebnissen einen Anstieg des Druckverlusts und die thermische Effizienz des Wärmetauschers (10) zu überwachen.

7. System zur Behandlung von organischem Abfall nach einem der Ansprüche 4 - 6, **dadurch gekennzeichnet, dass** das System eine Viskositäts- und/oder Feststoffgehalts-Steuereinheit (45) und eine Wärmetauscher-Steuereinheit (46) umfasst, die mit einer gemeinsamen Steuereinheit des Systems (100) verbunden sind oder als separate, mit einer gemeinsamen Steuereinheit des Systems (100) verbundene Steuereinheiten ausgebildet sind.

## Revendications

1. Échangeur thermique comprenant des tubes de surface de transfert de chaleur (16) agencés en au moins un faisceau de tubes (16) et des éléments d'extrémité, ledit échangeur thermique (10) comprenant une enveloppe (11) autour du faisceau de tubes (16), lesdits tubes (16) étant rectilignes, la substance à chauffer ou à refroidir étant, dans l'échangeur thermique (10), configurée pour s'écouler dans les tubes (16), un milieu de transfert thermique stationnaire (20; 21) étant situé dans des volumes (19) à l'intérieur de l'enveloppe (11) entre les tubes (16), et chaque extrémité des tubes (16) étant fixée de manière amovible à l'élément d'extrémité, ledit échangeur thermique (10) ayant un côté primaire (17) et un côté secondaire (18), qui sont formés au moyen de canaux situés dans les éléments d'extrémité, et l'échangeur thermique (10) étant, au moyen du côté primaire (17) et du côté secondaire (18), configuré pour chauffer et refroidir deux substances différentes en faisant circuler les deux substances différentes en sens opposés l'une par rapport à l'autre dans le côté primaire (17) et le côté secondaire (18), **caractérisé en ce que** les éléments d'extrémité sont formés de plaques tubulaires (12) et de plaques de chambre de renvoi (13, 14), lesdites plaques (12, 13, 14) étant étanchées par des joints (15) situés entre les plaques (12, 13, 14), et **en ce que** les canaux situés dans les éléments d'extrémité sont situés dans les plaques tubulaires (12) et les plaques de chambre de renvoi (13, 14) des éléments d'extrémité.

2. Échangeur thermique selon la revendication 1, **caractérisé en ce que** les éléments d'extrémité sont ouvrables au moyen de la fixation amovible et **en ce que** les tubes (16) sont configurés pour être nettoyés lorsque les éléments d'extrémité sont retirés.

3. Échangeur thermique selon la revendication 1 ou 2, **caractérisé en ce que** le milieu de transfert thermique comprend une substance de type masse et/ou de type pâte (20) et/ou une substance solide (21).

4. Système de traitement de déchets organiques, ledit système étant un système de traitement de déchets organiques au moyen de la carbonisation hydrothermale, ledit système comprenant au moins une source de déchets organiques, au moins une cuve (31) de déchets organiques humides, au moins un réacteur thermique (33; 34) pour la carbonisation hydrothermale, et un échangeur thermique (10) selon l'une quelconque des revendications 1 - 3, **caractérisé en ce que** l'au moins une cuve (31) de déchets organiques humides et l'au moins un réacteur thermique (33; 34) sont en liaison d'écoulement (53; 54) avec l'échangeur thermique (10) et **en ce que** l'échangeur thermique (10) est configuré pour chauffer les déchets organiques à traiter dans les réacteurs thermiques (33, 34) au moyen de la carbonisation hydrothermale et pour refroidir une boue de biochar issue des réacteurs thermiques (33, 34) à la suite de la carbonisation hydrothermale.

5. Système de traitement de déchets organiques selon la revendication 4, **caractérisé en ce que** le système comprend une unité de pressurisation de la ligne de décharge (47) pour pré-pressuriser la décharge d'au moins l'un des réacteurs thermiques (33, 34).

6. Système de traitement de déchets organiques selon la revendication 4 ou 5, **caractérisé en ce que** l'échangeur thermique (10) est relié à une unité de surveillance de l'échange thermique (46), laquelle unité de surveillance (46) est configurée pour surveiller l'augmentation de la perte de pression et l'efficacité thermique de l'échangeur thermique (10) sur la base de résultats de mesure issus de moyens de mesure, par exemple des capteurs, prévus dans l'échangeur thermique (10).

7. Système de traitement de déchets organiques selon l'une quelconque des revendications 4 - 6, **caractérisé en ce que** le système comprend une unité de commande de viscosité et/ou de teneur en solides (45) et une unité de commande de l'échangeur thermique (46), reliées à une unité de commande commune du système (100) ou constituées sous forme d'unités de commande séparées reliées à une unité de commande commune du système (100).
